# EUROPÄISCHE PATENTSCHRIFT

(11) **EP 2 834 093 B1**
(45) Veröffentlichungstag und Bekanntmachung des Hinweises auf die Patenterteilung: **03.04.2019**
(21) Anmeldenummer: 13715943.0
(22) Anmeldetag: 04.04.2013
(51) Int. Cl.: B60G 15/14, B60G 3/06

(54) **SCHWERLASTANHÄNGER MIT MACPHERSON-EINZELRADAUFHÄNGUNG**
HEAVY-DUTY TRAILER WITH MACPHERSON INDEPENDENT WHEEL SUSPENSION
REMORQUES POUR POIDS LOURDS DOTÉES D'UNE SUSPENSION INDÉPENDANTE MACPHERSON

(30) Priorität: 05.04.2012 DE 102012205641
(43) Veröffentlichungstag der Anmeldung: 11.02.2015
(73) Patentinhaber: Goldhofer AG, 87700 Memmingen (DE)
(72) Erfinder: SWOBODA, Herbert, 87785 Winterrieden (DE); MAIER, Georg, 89257 Illertissen (DE)
(74) Vertreter: Weickmann & Weickmann PartmbB
(86) Internationale Anmeldenummer: PCT/EP2013/057106
(87) Internationale Veröffentlichungsnummer: WO 2013/150099

(56) Entgegenhaltungen:
- EP-A1- 0 275 407
- EP-A1- 0 620 132
- EP-A1- 1 122 151
- EP-A2- 1 985 474
- DE-A1- 2 851 324
- DE-B- 1 120 290
- DE-U1- 9 106 927
- FR-A1- 2 820 089
- NL-C- 2 003 566

## Beschreibung

Die Erfindung betrifft einen Schwerlastanhänger mit einer Mehrzahl von Rädern mit Einzelradaufhängung.

Schwerlastanhänger oder wie es im Anhang XI zur EG-Richtlinie 2007-46-EG in der Fassung vom 15.07.2011 heißt "Anhänger für Schwerlasttransporte" sind gemäß der dort gegebenen Definition dieses Begriffs Fahrzeuge der Klasse O₄ für den Transport von unteilbaren Ladungen (beispielsweise Rotorflügel von Windkraftanlagen), die aufgrund ihrer Abmessungen Geschwindigkeits- und Verkehrsbeschränkungen unterliegen, wobei hierzu auch hydraulische modulare Anhänger zählen, unabhängig von der Anzahl der Module.

Darüber hinaus weist die Radaufhängung der Räder eines Schwerlastanhängers beispielsweise einen Hubweg von mindestens 20 cm, vorzugsweise mindestens 25 cm, noch bevorzugter mindestens 28 cm, zwischen dem maximal eingefederten Zustand und dem maximal ausgefederten Zustand auf, damit der Schwerlastanhänger Mulden durchfahren kann, ohne dass die Ladefläche ihre Ausrichtung relativ zur Horizontalen verändern muss. Und auch beim Passieren enger Kurven, beispielsweise beim Durchfahren eines Kreisverkehrs, oder beim Überfahren von Schwellen müssen die Räder durch Einfedern etwaige Unebenheiten des Untergrunds ausgleichen können. Ferner kommen als Anhänger erfindungsgemäß alle Arten von Anhängern in Betracht, d.h. insbesondere sowohl Anhänger zur Bildung von Gliederzügen als auch Sattelauflieger.

Ein allgemeines Problem, das bei Schwerlastanhängern mit Einzelradaufhängung auftritt, ist der begrenzte Raum, der zur Unterbringung der Komponenten der Einzelradaufhängung neben der Baggermulde oder der Zentralröhre des Anhängers zur Verfügung steht.

Ein Schwerlastanhänger, dessen Räder jeweils mittels einer Einzelradaufhängung mit dem Rahmen des Anhängers verbunden sind, ist beispielsweise aus der EP 1 985 474 A2 bekannt. Bei der aus dieser Schrift bekannten Einzelradaufhängung ist der Radträger über einen oberen Dreiecksquerlenker und einen unteren Dreiecksquerlenker mit dem Rahmen des Anhängers verbunden. Das Federbein stützt sich mit seinem unteren Ende auf dem unteren Dreiecksquerlenker ab, erstreckt sich zwischen den beiden Schenkeln des oberen Dreiecksquerlenkers hindurch nach oben und ist mit seinem oberen Ende am Rahmen des Schwerlastanhängers angelenkt. Der Bremszylinder ist in Fahrtrichtung vor dem Radträger und vor dem vorderen Schenkel des oberen Dreiecksquerlenkers angeordnet. Um das Verschwenken des Radträgers im Zuge des Lenkens des Schwerlastanhängers ermöglichen zu können, ist der vordere Schenkel des oberen Dreiecksquerlenkers gekröpft ausgebildet. In der Praxis hat sich diese Ausführungsform aber offensichtlich nicht bewährt, denn bei den tatsächlich realisierten Schwerlastanhängern der Anmelderin der EP 1 985 474 A2 ist der Bremszylinder in einer schräg nach unten weisenden Anordnung eingebaut, um auch bei Einsatz der Radaufhängung bei einem gelenkten Rad jedweden unerwünschten Kontakt mit den anderen Komponenten der Radaufhängung vermeiden zu können.

Aus der DE-B-1120290 ist eine Radaufhängung für Räder von Schwerlastfahrzeugen bekannt, welche als Einzelradaufhängung ausgeführt ist. Diese Einzelradaufhängung für Schwerlastfahrzeuge umfasst eine Hubeinrichtung, um ein der Einzelradaufhängung zugeordnetes Rad anheben oder absenken zu können.

Ferner ist aus der EP-A-620132 eine Radaufhängung für Schwerlastfahrzeuge bekannt, welche ebenfalls als Einzelradaufhängung ausgeführt ist.

Aus der EP-A-1122151 ist ein Schwerlastfahrzeug bekannt, welches einen vorderen Trägerverband und einen hinteren Trägerverband umfasst, welche mittels einer Teleskopverbindung in Relation zueinander verlagerbar sind, so dass eine sich aus dem vorderen Trägerverband und dem hinteren Trägerverband ergebende Tragfläche vergrößert oder verkleinert werden kann. Die Radaufhängungen sind dabei als Einzelradaufhängungen ausgeführt.

Des Weiteren ist aus der NL-C-2003566 eine Radaufhängung für ein Schwerlastfahrzeug bekannt, welche aufgrund ihrer Anordnung als Einzelradaufhängung eine besonders schmale Bauweise für ein Schwerlastfahrzeug ermöglicht.

Darüber hinaus seien die Dokumente DE-U-9106927, EP-A-0275407, DE-A-2851324 und FR-A-2820089 erwähnt.

Es ist daher Aufgabe der vorliegenden Erfindung, eine Einzelradaufhängung für einen Schwerlastanhänger bereitzustellen, bei welcher der für die Unterbringung der Einzelradaufhängung zur Verfügung stehende Bauraum vorteilhaft ausgenutzt werden kann.

Diese Aufgabe wird erfindungsgemäß durch einen Schwerlastanhänger gemäß dem Anspruch 1 gelöst. Bei der MacPherson-Radaufhängung, deren Bauart an sich seit dem Ende der 40er-Jahre des vergangenen Jahrhunderts bekannt ist (siehe US 2,660,449 A), übernimmt das Kolben-Zylinder-Aggregat gleichzeitig die Funktion des Radträgers. Zudem kann der obere Querlenker entfallen. Durch die reduzierte Anzahl von Komponenten können die noch vorhandenen Komponenten der Radaufhängung in dem beschränkten zur Verfügung stehenden Bauraum mit größerer Freiheit angeordnet werden.

Es bestand in der Fachwelt aber ein grundlegendes Vorurteil gegen den Einsatz von MacPherson-Radaufhängungen bei Schwerlastanhängern, denn neben der Bereitstellung eines großen Hubwegs muss die Radaufhängung auch in der Lage sein, die Bremsmomente (und bei angetriebenen Rädern auch die Antriebsmomente) aufnehmen können, die auf das Rad einwirken. Da diese Momente im Schwerlastbereich besonders hoch sind, herrschte die Meinung, dass dies mit einer MacPherson-Radaufhängung, die einen Hubweg von mindestens 20 cm, vorzugsweise von mindestens 25 cm, noch bevorzugter von mindestens 28 cm, bereitstellt, nicht möglich sei. Es ist das Verdienst der Erfinder, sich über dieses Vorurteil hinweggesetzt zu haben. In einer Analyse der Betriebszustände von Schwerlastanhängern haben sie herausgefunden, dass der für Verschleiß besonders anfällige, maximal ausgefederte Zustand der Radaufhängung meist nur in Fahrsituationen vorkommt, in denen der Schwerlastanhänger mit niedriger Geschwindigkeit bewegt wird. In diesen Fahrsituationen sind die auftretenden Bremsmomente (bzw. Antriebsmomente) aber vergleichsweise niedrig, so dass der resultierende Verschleiß unter Berücksichtigung der geringen Häufigkeit dieser Fahrsituationen toleriert werden kann.

Um die Momentenaufnahme weiter verbessern zu können, wird in Weiterbildung der Erfindung vorgeschlagen, dass der Zylinder des Kolben-Zylinder-Aggregats der MacPherson-Radaufhängung von einem, vorzugsweise zylindrischen, Führungsrohr umgeben ist. Auf diese Weise können die Brems- und gegebenenfalls Antriebsmomente im Zusammenwirken von Führungsrohr und Zylinder aufgenommen werden und brauchen somit nicht im Kolben-Zylinder-Aggregat aufgenommen zu werden. Die geringere Momentenaufnahme im Kolben-Zylinder-Aggregat reduziert die Belastungen der Dichtungseinheiten zwischen der Umfangsfläche des Kolbens und der Innenfläche des Zylinders einerseits und zwischen der Kolbenstange und dem Kolbenstangenaustrittsende des Zylinders andererseits. Hierdurch reduziert sich auch der so genannte Stick-Slip-Effekt, der zum Verschleiß in Kolben-Zylinder-Aggregaten beiträgt. Vorteilhaft ist in diesem Zusammenhang ferner, wenn das eine Ende des Führungsrohrs mit dem freien Ende der Kolbenstange des Kolben-Zylinder-Aggregats axial fest verbunden ist.

Zur Erleichterung der Relativbewegung von Führungsrohr und Zylinder kann vorgesehen sein, dass an der Außenseite des Zylinders des Kolben-Zylinder-Aggregats, und zwar vorzugsweise jenem Ende, aus dem die Kolbenstange aus dem Zylinder austritt, benachbart, eine Gleitlageranordnung vorgesehen ist, welche mit der Innenseite des Führungsrohrs in Gleiteingriff steht oder/und dass an der Innenseite des Führungsrohrs, und zwar vorzugsweise dessen freiem Ende benachbart, eine Gleitlageranordnung vorgesehen ist, welche mit der Außenseite des Zylinders des Kolben-Zylinder-Aggregats in Gleiteingriff steht.

Um im Betrieb des Schwerlastanhängers eine unkontrollierte Relativverdrehung von Zylinder und Kolben-Kolbenstangen-Einheit verhindern zu können, wird in Weiterbildung der Erfindung vorgeschlagen, dass das freie Ende des Zylinders des Kolben-Zylinder-Aggregats am Anhängerrahmen relativ zu diesem um die Achse des Zylinders unverdrehbar angelenkt ist, beispielsweise über einen Gelenkbolzen. Unabhängig von der unverdrehbaren Anlenkung ist die Anlenkung des freien Endes des Zylinders am Anhängerrahmen im Hinblick auf die Führung des Zylinders im Führungsrohr vorteilhaft. Das dem freien Ende des Zylinders gegenüber liegende Ende des Kolben-Zylinder-Aggregats kann beispielsweise über einen Querlenker am Anhängerrahmen angelenkt sein, wobei das Kolben-Zylinder-Aggregat mit dem Querlenker vorzugsweise über ein Kugelgelenk verbunden sein kann.

In Weiterbildung der Erfindung wird vorgeschlagen, dass das Kolben-Zylinder-Aggregat, vorzugsweise das Führungsrohr des Kolben-Zylinder-Aggregats, Befestigungsstellen zur Befestigung an einer mit dem Radträger, vorzugsweise dem Achsstummel des Radträgers, verbundenen, vorzugsweise mit diesem einstückig ausgebildeten oder stoffschlüssig verbundenen, Montagebaugruppe aufweist. Grundsätzlich ist es aber auch denkbar, das Führungsrohr des Kolben-Zylinder-Aggregats mit dem Radträger, vorzugsweise mit dem Achsstummel des Radträgers, einstückig auszubilden oder stoffschlüssig zu verbinden. Unter Berücksichtigung der Baugröße der für die Einzelradaufhängung von Schwerlastanhängern erforderlichen Komponenten kann es jedoch im Sinne einer Vereinfachung der Fertigung und der Ersatzteilbevorratung vorteilhaft sein, wenn das Führungsrohr als von der Montagebaugruppe gesonderte Komponente gefertigt wird.

Dabei kann wenigstens eine Befestigungsstelle eine der Montagebaugruppe angehörende Stützplatte umfassen, auf der das Kolbenstangenende des Kolben-Zylinder-Aggregats im betriebsbereiten Zustand aufsteht. Mit dieser Stützplatte kann das Kolben-Zylinder-Aggregat beispielsweise verschraubt sein, vorzugsweise über eine Mehrzahl von Schraubverbindungen, die insbesondere auf einer die Achse des Kolben-Zylinder-Aggregats umgebenden Kreislinie gleichmäßig verteilt angeordnet sein können. Zur Erhöhung der Stabilität der Verbindung ist es in diesem Zusammenhang ferner vorteilhaft, wenn die Stützplatte zusammen mit einem ihr zugeordneten Rand eine Aufnahmetasche bildet, welche das Kolbenstangenende des Kolben-Zylinder-Aggregats im betriebsbereiten Zustand formschlüssig aufnimmt.

Ferner kann der Kugelkopf eines Kugelgelenks zur Anlenkung des Kolben-Zylinder-Aggregats an einem Querlenker der Radaufhängung an der Stützplatte angeordnet sein, beispielsweise mit dieser verbunden sein, vorzugsweise mit dieser verschraubt sein.

Ist das Kolben-Zylinder-Aggregat von einem Führungsrohr umgeben, so kann die Stützplatte auch die Funktion einer Verbindungsplatte übernehmen, welche das freie Ende der Kolbenstange des Kolben-Zylinder-Aggregats axial fest mit dem Führungsrohr verbindet.

In einem bezogen auf die Achse des Kolben-Zylinder-Aggregats axialen Abstand zur Stützplatte kann zudem wenigstens eine weitere Befestigungsstelle zur Befestigung des Kolben-Zylinder-Aggregats an der Montagebaugruppe vorgesehen sein, beispielsweise eine Schraubverbindungsstelle.

Alternativ zu der Ausführungsvariante mit Stützplatte ist es grundsätzlich auch denkbar, das Kolben-Zylinder-Aggregat mit der Montagebaugruppe über eine Mehrzahl von Schraubverbindungsstellen zu verbinden, von denen wenigstens zwei bezogen auf die Achse des Kolben-Zylinder-Aggregats einen axialen Abstand voneinander aufweisen. Der Kugelkopf eines Kugelgelenks zur Anlenkung des Kolben-Zylinder-Aggregats an einem Querlenker der Radaufhängung kann in diesem Fall mit der Kolbenstange verbunden sein, beispielsweise durch Verschrauben. Ferner können die dem Kolben-Zylinder-Aggregat zugehörigen Teile der Schraubverbindungsstellen an dem Führungsrohr angebracht sein, beispielsweise mit diesem verschweißt sein.

Im Falle der einstückigen oder stoffschlüssig verbundenen Ausbildung von Führungsrohr und Radträger kann der Kugelkopf des Kugelgelenks zur Anlenkung des Kolben-Zylinder-Aggregats an einem Querlenker der Radaufhängung an der Führungsrohr-Radträger-Einheit vorgesehen sein.

Um eine kompakte Anordnung der Komponenten der Einzelradaufhängung ermöglichen zu können, ist erfindungsgemäß der Bremszylinder dem Kolben-Zylinder-Aggregat benachbart angeordnet. In einer Weiterbildung der Erfindung wird vorgeschlagen, dass der Bremszylinder dem Kolben-Zylinder-Aggregat unmittelbar angrenzend angeordnet ist. Als unmittelbar angrenzend wird dabei auch eine Anordnung angesehen, bei der der Bremszylinder und das Kolben-Zylinder-Aggregat einen Abstand voneinander aufweisen, der zur Vermeidung unerwünschter Geräuschentwicklung sicherstellt, dass der Bremszylinder und das Kolben-Zylinder-Aggregat unter dem Einfluss von im Betrieb auftretenden Vibrationen gerade nicht mehr aneinander anstoßen.

Eine besonders kompakte Anordnung kann erzielt werden, wenn die Zylinderachsen des Bremszylinders und des Kolben-Zylinder-Aggregats zueinander im Wesentlichen parallel verlaufen. Auch die Anbringung des Bremszylinders am Kolben-Zylinder-Aggregat, beispielsweise dem Führungsrohr, oder/und an der Montagebaugruppe wird hierdurch erleichtert, da eine hierfür vorzusehende Halterung in diesem Fall im Wesentlichen orthogonal zur Achse des Kolben-Zylinder-Aggregats verläuft.

Im Falle der einstückigen oder stoffschlüssig verbundenen Ausbildung von Führungsrohr und Radträger kann die Halterung für den Bremszylinder an der Führungsrohr-Radträger-Einheit vorgesehen sein, vorzugsweise am Führungsrohr.

Um die Gefahr einer Beschädigung des Bremszylinders im Betrieb reduzieren zu können, wird erfindungsgemäß vorgeschlagen, dass das freie Ende des Bremszylinders nach oben weist, d.h. von der Fahrfläche weg.

Das den Bremszylinder mit der im Radträger integrierten Bremseinrichtung verbindende Bremsgestänge umfasst einen Bremshebel und eine Bremswelle, wobei der Bremshebel bei einer Druckbeschlagung des Bremszylinders durch das Ausfahren von dessen Kolbenstange die Bremswelle verdreht. Um die Länge der Bremswelle zur Sicherstellung ihrer ordnungsgemäßen Funktion kurz ausbilden zu können, ist gemäß der Erfindung die Achse des Bremszylinders relativ zur Radachse um eine vorbestimmte Distanz versetzt angeordnet. In einer Weiterbildung der Erfindung wird vorgeschlagen, die Achse des Bremszylinders in Fahrtrichtung des Schwerlastanhängers nach vorne versetzt anzuordnen. In diesem Zusammenhang sei darauf hingewiesen, dass die Achse des Bremszylinders und die Radachse im Wesentlichen orthogonal und windschief zueinander verlaufen, d.h. sie schneiden einander nicht, wobei der minimale Abstand der beiden Achsen voneinander die vorbestimmte Distanz definiert.

Zusätzlich oder alternativ kann die ordnungsgemäße Funktion der Bremswelle auch dadurch sichergestellt werden, dass eine Abstützeinrichtung für die den Bremszylinder mit der Bremseinrichtung des Radträgers verbindende Bremswelle vorgesehen ist. Diese Abstützeinrichtung kann vorteilhafterweise an der Montagebaugruppe oder/und dem Führungsrohr des Kolben-Zylinder-Aggregats angeordnet sein. Im Falle der einstückigen oder stoffschlüssig verbundenen Ausbildung von Führungsrohr und Radträger kann auch diese Abstützeinrichtung an der Führungsrohr-Radträger-Einheit vorgesehen sein, vorzugsweise am Führungsrohr.

Auch der Lenkhebel der Radaufhängung kann am Kolben-Zylinder-Aggregat, beispielsweise dessen Führungsrohr, oder/und an der Montagebaugruppe ausgebildet sein. Im Falle der einstückigen oder stoffschlüssig verbundenen Ausbildung von Führungsrohr und Radträger kann auch der Lenkhebel an der Führungsrohr-Radträger-Einheit vorgesehen sein, vorzugsweise am Führungsrohr.

An dieser Stelle sei darauf hingewiesen, dass die Komponenten der den Achsstummel umfassenden Baueinheit, nämlich neben der Montagebaugruppe auch die Stützplatte für das Kolben-Zylinder-Aggregat oder/und die wenigstens eine weitere Befestigungsstelle für das Kolben-Zylinder-Aggregat oder/und die Halterung für den Bremszylinder oder/und die Abstützung für die Bremswelle oder/und der Lenkhebel, einstückig miteinander ausgebildet sein können, und zwar beispielsweise als Gussteil oder als Schmiedeteil. Es ist jedoch auch möglich wenigstens eine dieser Komponenten als Gussteil zu fertigen oder/und wenigstens eine dieser Komponenten als Schmiedeteil zu fertigen oder/und wenigstens eine dieser Komponenten als Blechteil, vorzugsweise aus Stahlblech, beispielsweise durch Stanzen oder/und Schneiden oder/und Biegen, zu fertigen, wobei diese Komponenten anschließend mit der Baueinheit oder zu der Baueinheit stoffschlüssig verbunden werden, beispielsweise durch Schweißen. Analoges gilt auch im Falle der einstückigen oder stoffschlüssig verbundenen Ausbildung von Führungsrohr und Radträger.

In Weiterbildung der Erfindung wird vorgeschlagen, dass wenigstens ein Rad des Schwerlastanhängers ein gelenktes Rad ist. Um in diesem Fall sicherstellen zu können, dass der Bremszylinder in keiner Lenkstellung des Rades mit einer anderen Komponente der Radaufhängung kollidiert, wird vorgeschlagen, die Komponenten der Radaufhängung derart anzuordnen, dass in einer Projektion in Anhängerlängsrichtung betrachtet die Projektionsfläche des Bremszylinders die Projektionsflächen des Querlenkers und der Spurstange nicht überlappt, oder/und dass in einer Vertikalprojektion betrachtet die Projektionsfläche der von der Kolbenstange des Bremszylinders und dem Bremsgestänge gebildeten Baugruppe in jeder Lenkstellung des Rads die Projektionsfläche der Spurstange nicht überlappt.

Das wenigstens eine Rad kann auch ein angetriebenes Rad sein. Dabei ist im Hinblick auf die vorstehend geschilderte Bauraumproblematik der Einsatz eines Einzelradantriebs vorteilhaft, der beispielsweise einen Elektromotor oder/und einen Hydromotor umfassen kann.

Ein weiteres Problem, das bei Schwerlastanhängern aufgrund des großen Hubwegs auftritt, ist die Spurweitenveränderung infolge des Ein- bzw. Ausfederns. Um diesen Effekt mindern zu können, wird erfindungsgemäß vorgeschlagen, dass die Anlenkachse des Querlenkers der Radaufhängung am Anhängerrahmen unterhalb einer Baggermulde oder Zentralröhre des Anhängers angeordnet ist.

Folgt man herkömmlichen Konstruktionsansätzen, so wird man in Weiterbildung dieser Konstruktionsvorschrift bemüht sein, die Anlenkachse der Querlenker am Anhängerrahmen so nahe wie möglich an der Längsmittelebene des Anhängers anzuordnen, so wie dies beispielsweise aus der EP 1 985 474 A2 bekannt ist. Die Erfinder der vorliegenden Erfindung haben sich jedoch von dieser herkömmlichen Denkweise gelöst und schlagen vor, die Anlenkachse der Querlenker am Anhängerrahmen zumindest in der Längsmittelebene des Anhängers, vorzugsweise sogar auf der dem zugeordneten Rad abgewandten Seite der Längsmittelebene anzuordnen. Da dieser Gedanke auch unabhängig von der Ausbildung der Radaufhängung als MacPherson-Radaufhängung von Vorteil ist, wird für diesen Gedanken hiervon unabhängiger Schutz angestrebt.

Sind die Querlenker zweier einander in Anhängerquerrichtung gegenüber liegender Räder beide als Dreiecksquerlenker ausgebildet, so können die Anlenkachsen der freien Enden der Schenkel der Dreiecksquerlenker derart angeordnet sein, dass jeweils einer der Schenkel der beiden Dreiecksquerlenker mit seinem freien Ende zwischen die beiden Schenkel des jeweils anderen Dreiecksquerlenkers eingreift. Dies bedingt zwar einerseits Dreiecksquerlenker, die für die beiden einander gegenüber liegenden Räder unterschiedlich ausgebildet sind, bietet aber andererseits die Möglichkeit, die Länge der Schenkel der Dreiecksquerlenker bis zur Längsmittelebene des Anhängers oder sogar über diese hinaus zu erhöhen. Dies reduziert nicht nur die mit dem Ein- und Ausfedern verbundene Spurweitenänderung, sondern auch die damit verbundene Änderung des Radsturzes.

Beispielsweise können die Anlenkachsen der beiden Dreiecksquerlenker alle in der Längsmittelebene des Anhängers angeordnet sein, wobei vorzugsweise jeweils zwei der Anlenkachsen zu einer gemeinsamen Anlenkachse zusammengefasst sind. Zur Erhöhung der Länge der Querlenker ist es alternativ jedoch auch möglich, dass die Anlenkachsen jedes der beiden Dreiecksquerlenker auf der vom zugehörigen Rad abgewandten Seite der Längsmittelebene des Anhängers, vorzugsweise dem gegenüber liegenden Rand der Baggermulde benachbart, angeordnet sind. Dabei kann zur Erhöhung der Bodenfreiheit sowohl im ein- als auch im ausgefederten Zustand ferner vorgesehen sein, dass die Schenkel der Querlenker gekrümmt ausgebildet sind, wobei die konkave Seite der Krümmung im betriebsbereiten Zustand zur Fahrfläche hin weist.

In Weiterbildung der Erfindung wird vorgeschlagen, dass die Lenkzylinder der Lenkeinrichtung des Schwerlastanhängers mit der Anhängerlängsrichtung einen von Null verschiedenen Winkel einschließen, dessen Wert vorzugsweise zwischen etwa 10° und etwa 70° beträgt, noch bevorzugter zwischen etwa 35° und etwa 55°. Hierdurch kann der für die Anlenkung der Querlenker am Rahmen des Schwerlastanhängers erforderliche Bauraum in besonders einfacher Weise bereitgestellt werden. Da dieser Gedanke auch unabhängig von der Ausbildung der Radaufhängung als MacPherson-Radaufhängung von Vorteil ist, wird für diesen Gedanken hiervon unabhängiger Schutz angestrebt.

Die Erfindung wird im Folgenden an Ausführungsbeispielen anhand der beigefügten Zeichnung näher erläutert werden. Es stellt dar:
- Figur 1: eine Seitenansicht eines Schwerlastanhängers, bei dem die erfindungsgemäße MacPherson-Einzelradaufhängung zum Einsatz kommen kann;
- Figur 2: eine orthogonal zur Anhängerlängsrichtung genommene Schnittansicht zur Erläuterung der erfindungsgemäßen Einzelradaufhängung;
- Figur 3: eine perspektivische Ansicht einer ersten Ausführungsform der Hauptkomponenten der erfindungsgemäßen Einzelradaufhängung;
- Figur 4: eine perspektivische Ansicht des Achsstummels und der diesem zugeordneten Montagebaugruppe gemäß der ersten Ausführungsform;
- Figur 5: eine Draufsicht auf die in Figur 3 dargestellten Hauptkomponenten der erfindungsgemäßen Einzelradaufhängung;
- Figur 6: eine Schnittansicht des Kolben-Zylinder-Aggregats der ersten Ausführungsform;
- Figur 7: eine Draufsicht auf das Fahrwerk und die Lenkeinrichtung eines Schwerlastanhängers, dessen Räder mit erfindungsgemäßen Einzelradaufhängungen der ersten Ausführungsform ausgestattet ist, zur Erläuterung der Lenkung des Schwerlastanhängers;

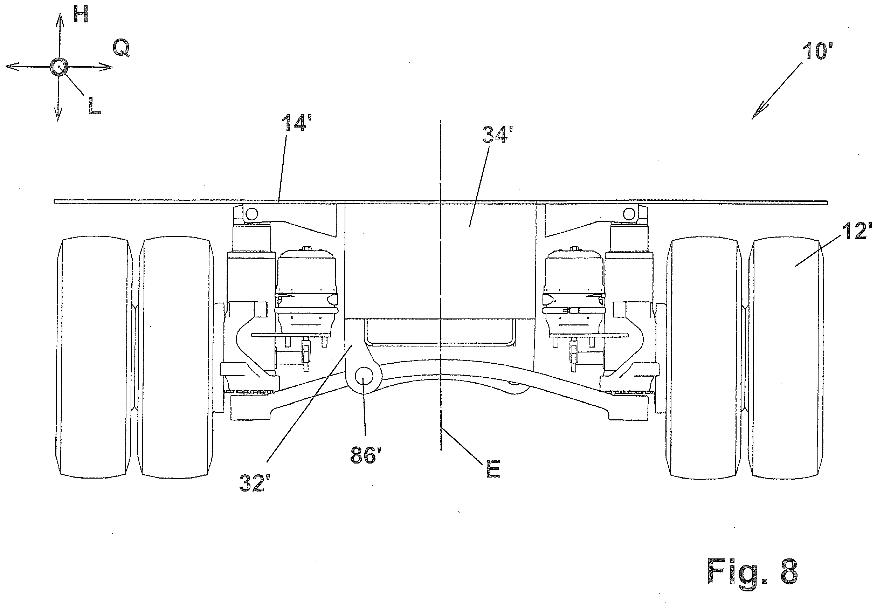

- Figur 8: eine Ansicht ähnlich Figur 2 zur Erläuterung einer Abwandlung der ersten Ausführungsform;
- Figur 9: eine perspektivische Ansicht zu Erläuterung erfindungswesentlicher Details der Abwandlung der ersten Ausführungsform;
- Figur 10: eine Druntersicht unter den erfindungsgemäßen Schwerlastanhänger zur Erläuterung erfindungswesentlicher Details der Abwandlung der ersten Ausführungsform;
- Figur 11: eine perspektivische Ansicht einer zweiten Ausführungsform der Hauptkomponenten der erfindungsgemäßen Einzelradaufhängung;
- Figur 12: eine perspektivische Ansicht des Kolben-Zylinder-Aggregats der zweiten Ausführungsform;
- Figur 13: eine perspektivische Ansicht des Achsstummels un der diesem zugeordneten Montagebaugruppe gemäß der zweiten Ausführungsform; und
- Figur 14: eine perspektivische Ansicht einer dritten Ausführungsform der erfindungsgemäßen Einzelradaufhängung.

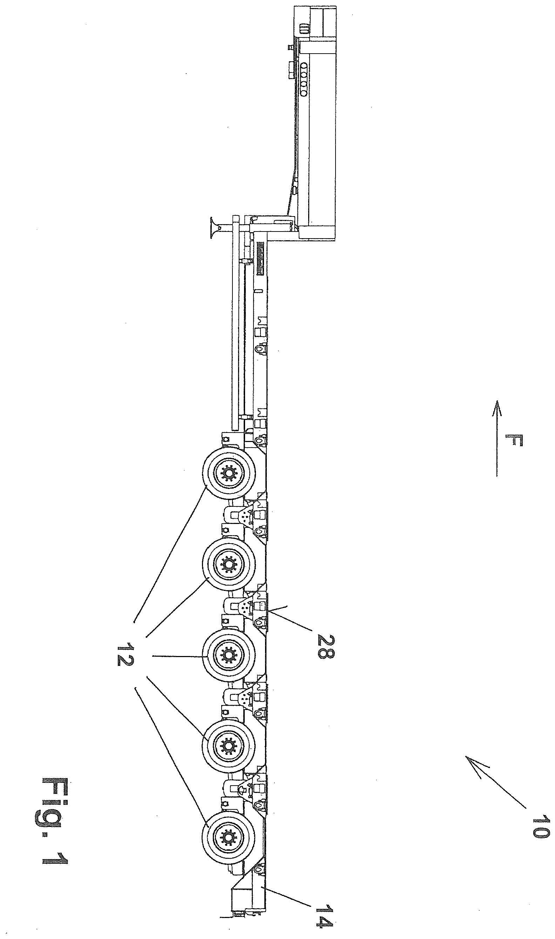

In Figur 1 ist ein erfindungsgemäßer Schwerlastanhänger ganz allgemein mit 10 bezeichnet. Erfindungsgemäß ist wenigstens eines der Räder 12 des Schwerlastanhängers mit einer Einzelradaufhängung in MacPherson-Bauweise ausgestattet, was nachstehend noch detailliert erläutert werden wird. An dieser Stelle sei jedoch schon darauf hingewiesen, dass der Schwerlastanhänger 10 gemäß Figur 1 lediglich beispielhaft als ein als Tieflader ausgeführter Sattelauflieger dargestellt ist, und dass die vorliegende Erfindung in gleicher Weise auch bei einem Sattelauflieger in Pritschen- oder Tiefbettausführung, bei einem von einem Zugfahrzeug über eine Deichsel gezogenen Nachlaufanhänger, oder bei einem modular aufgebauten Schwerlastanhänger verwirklicht sein kann, und das unabhängig davon ob das jeweilige Rad 12 ungelenkt oder gelenkt ist oder ein angetriebenes Rad oder ein reines Nachlaufrad ist.

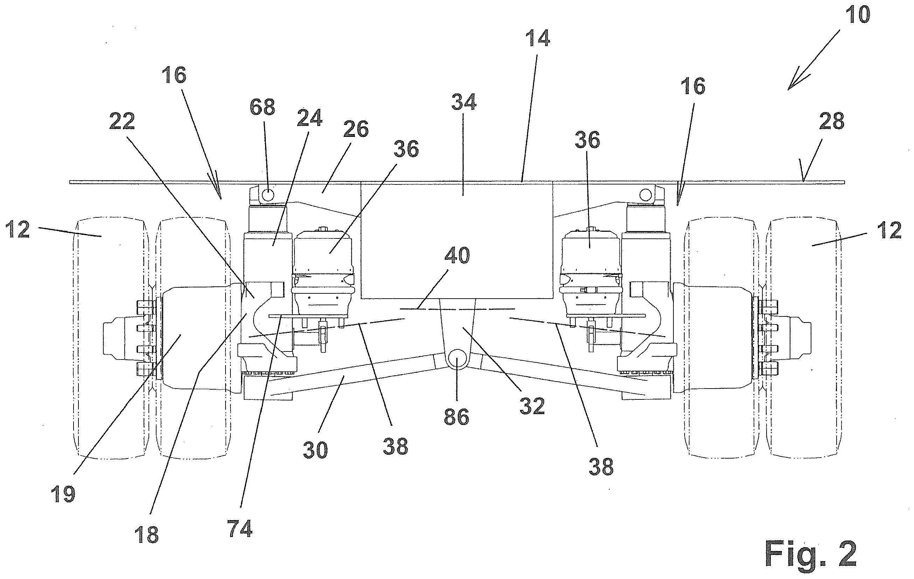

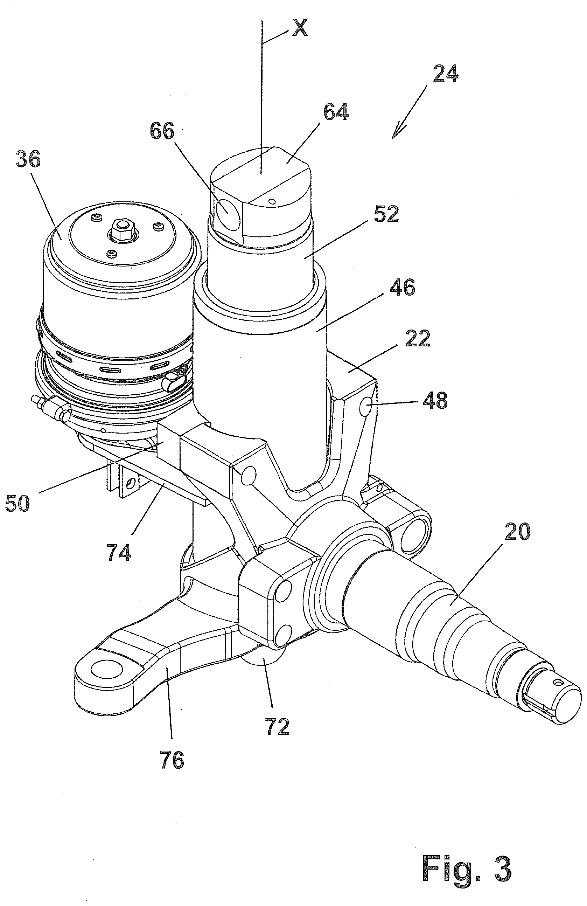

In Figur 2 sind die beiden Räder 12 einer der Achsen des Schwerlastanhängers 10 dargestellt. Beide Räder 12 sind über Einzelradaufhängungen 16 mit dem Rahmen 14 des Schwerlastanhängers 10 verbunden. Jede der Einzelradaufhängungen 16 umfasst einen Radträger 18, dessen Achsstummel 20 (siehe beispielsweise Figur 3) über eine Montagebaugruppe 22 mit einem Kolben-Zylinder-Aggregat 24 verbunden ist. Das Kolben-Zylinder-Aggregat 24 ist einenends an Streben 26 des Rahmens 14 des Schwerlastanhängers 10 angelenkt, welche unterhalb der Ladefläche 28 des Schwerlastanhängers 10 angeordnet sind, und andernends über Dreiecksquerlenker 30 an einem Rahmenteil 32, das sich von der Baggermulde 34 bzw. der Zentralröhre des Schwerlastanhängers 10 nach unten erstreckt. Ferner umfassen die Einzelradaufhängungen 16 noch einen Bremszylinder 36, der mit einer Bremseinrichtung 19 verbunden ist. Lediglich grob schematisch durch eine gestrichelte Linie angedeutet ist eine Spurstange 38, über die die Einzelradaufhängungen 16 mit dem Rahmen 14 des Schwerlastanhängers 10 oder im Falle gelenkter Räder 12 mit einer in Figur 2 ebenfalls lediglich grob schematisch angedeuteten Lenkeinrichtung 40 des Schwerlastanhängers 10 verbunden sind.

Mit Bezug auf die Figuren 3 bis 7 soll der Aufbau der Einzelradaufhängung 16 näher erläutert werden:

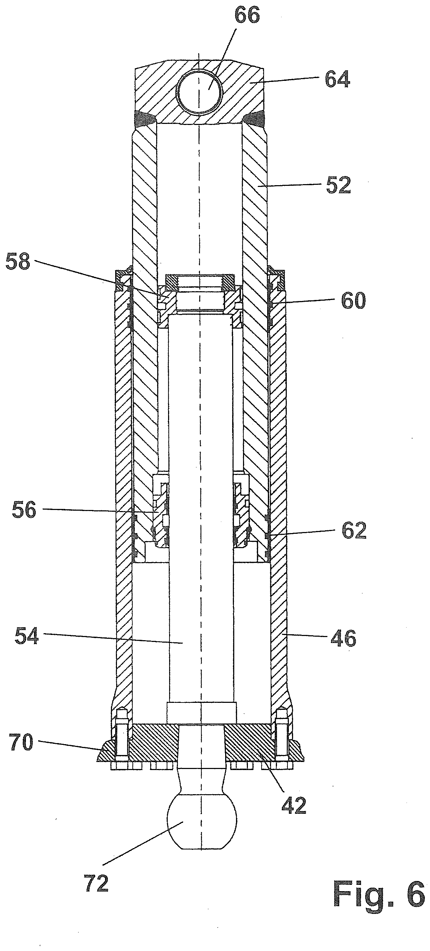

In den Figuren 3 bis 5 erkennt man den Achsstummel 20 des Radträgers 18, der mit einer Montagebaugruppe 22 stoffschlüssig verbunden ist. Die Montagebaugruppe 22 umfasst eine Stützplatte 42 für das Kolben-Zylinder-Aggregat 24, die von einem nach oben abstehenden Rand 44 eingefasst ist, so dass das Kolben-Zylinder-Aggregat 24 in der sich bildenden Aufnahmetasche formschlüssig aufgenommen ist. Gemäß Figur 6 ist die Stützplatte 42 mit einem noch näher zu erläuternden Führungsrohr 46 des Kolben-Zylinder-Aggregats 24 verschraubt. Zusätzlich weist die Montagebaugruppe 22 in einem bezüglich der Zylinderachse X des Kolben-Zylinder-Aggregats 24 axialen Abstand von der Stützplatte 42 zwei weitere Verbindungsstellen 48 auf, die mit zugeordneten Verbindungsansätzen 50 des Führungsrohrs 60 (aufgrund der Lage der Schnittebene in Figur 6 nicht erkennbar) verbunden werden können, beispielsweise durch Verschrauben. Auf diese Weise kann das Kolben-Zylinder-Aggregat 24 sicher und betriebsfest mit der Montagebaugruppe 22 verbunden werden.

Das als Hydraulikdämpfer ausgeführte Kolben-Zylinder-Aggregat 24 umfasst gemäß Figur 6 neben dem Führungsrohr 46 ferner einen Zylinder 52, eine Kolbenstange 54, die an einem Ende des Zylinders 52 mittels einer dort angeordneten Dichtungs- und Führungseinheit 56 aus diesem herausgeführt ist, sowie einen Kolben 58, der an dem im Inneren des Zylinders 52 angeordneten Ende der Kolbenstange 54 befestigt ist.

Die Kolbenstange 54 ist mit dem Führungsrohr 46 über die Stützplatte 42 betriebsfest verbunden, so dass sich das Führungsrohr 46 dann, wenn sich die Kolbenstange 54 relativ zum Zylinder 52 bewegt, ebenfalls relativ zum Zylinder 52 bewegt. Zur Ermöglichung dieser Relativbewegung sind zwischen dem Führungsrohr 46 und dem Zylinder 52 zwei Gleitlageranordnungen 60 und 62 vorgesehen. Da die Gleitlageranordnungen 60 und 62 keine andere Funktion erfüllen müssen, können sie so robust ausgelegt werden, dass sie die Funktion der Abstützung von Brems- und gegebenenfalls Antriebsmomenten übernehmen können. Diese Abstützung muss daher nicht von den Dichtungen der Dichtungs- und Führungseinheit 56 und des Kolbens 58 übernommen werden.

Das freie Ende 64 des Zylinders 52 kann mit einem Durchgangsloch 66 ausgebildet sein, welches zur bezüglich des Rahmens 14 unverdrehbaren Anlenkung an den Rahmenstreben 26 von einem Gelenkbolzen 68 (siehe Figur 2) durchsetzt werden kann. Grundsätzlich sind aber auch andere Arten der Anlenkung denkbar. An seinem gegenüber liegenden Ende 70 ist das Kolben-Zylinder-Aggregat 24 zur Anlenkung an dem Querlenker 30 mit einem Kugelbolzen 72 verbunden. Insbesondere kann der Schaft des Kugelbolzens 72 die Stützplatte 42 durchsetzen und mit der Kolbenstange 54 verschraubt sein.

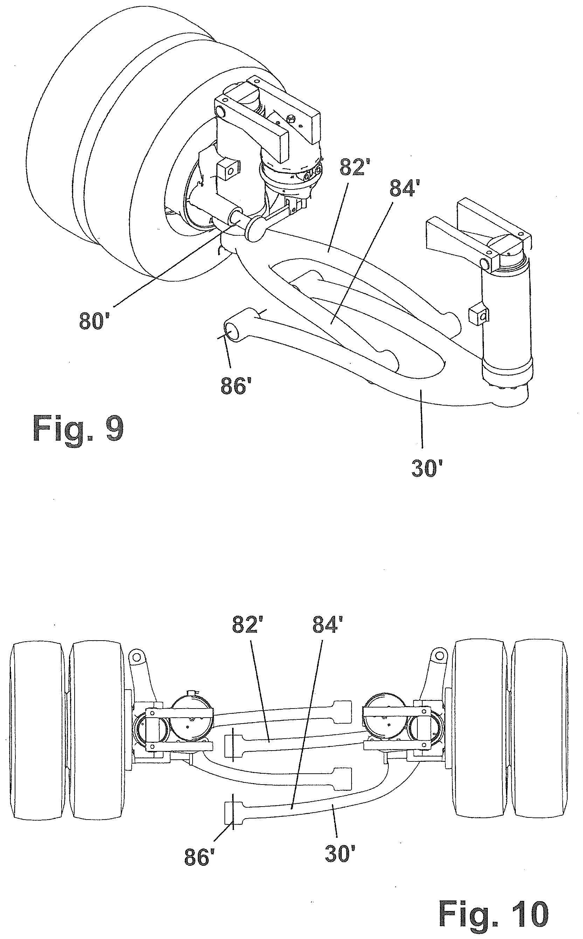

In der dargestellten Ausführungsform ist an dem Führungsrohr 46 des Kolben-Zylinder-Aggregats 24 ferner eine Halterungsplatte 74 für den Bremszylinder 36 befestigt, beispielsweise angeschweißt. Ferner weist die Montagebaugruppe 22 einen Lenkhebel 76 auf, an dem die Spurstange 38 angreift, sowie eine Abstützeinrichtung 78 für eine Bremswelle (entsprechend der Bremswelle 80' der Abwandlung gemäß Figur 9) der Bremseinrichtung 19.

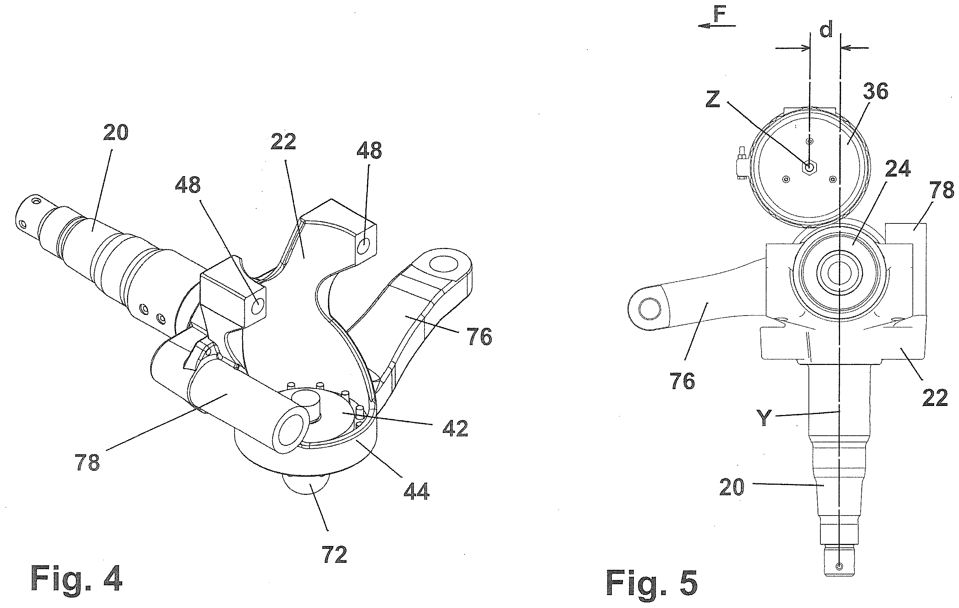

Um die Bremswelle möglichst kurz ausbilden zu können, ist der Bremszylinder 36 nicht exakt auf der vom Achsstummel 20 abgewandten Seite des Kolben-Zylinder-Aggregats 24 angeordnet, sondern in Fahrtrichtung F des Schwerlastanhängers 10 etwas nach vorne versetzt. Insbesondere weisen die Achse Y des Achsstummels 20 und die Achse Z des Bremszylinders 36 gemäß Figur 5 einen vorbestimmten Abstand d voneinander auf. Ferner ist darauf hinzuweisen, dass der Bremszylinder 36 an dem Führungsrohr 46 praktisch anliegt, genauer gesagt von diesem einen Abstand aufweist, der lediglich so groß bemessen ist, dass er im Betrieb des Schwerlastanhängers 10 sicherstellt, dass diese beiden Teile nicht gegeneinander schlagen, was neben einer unerwünschten Geräuschentwicklung auch das Risiko einer Beschädigung dieser Teile zur Folge haben könnte.

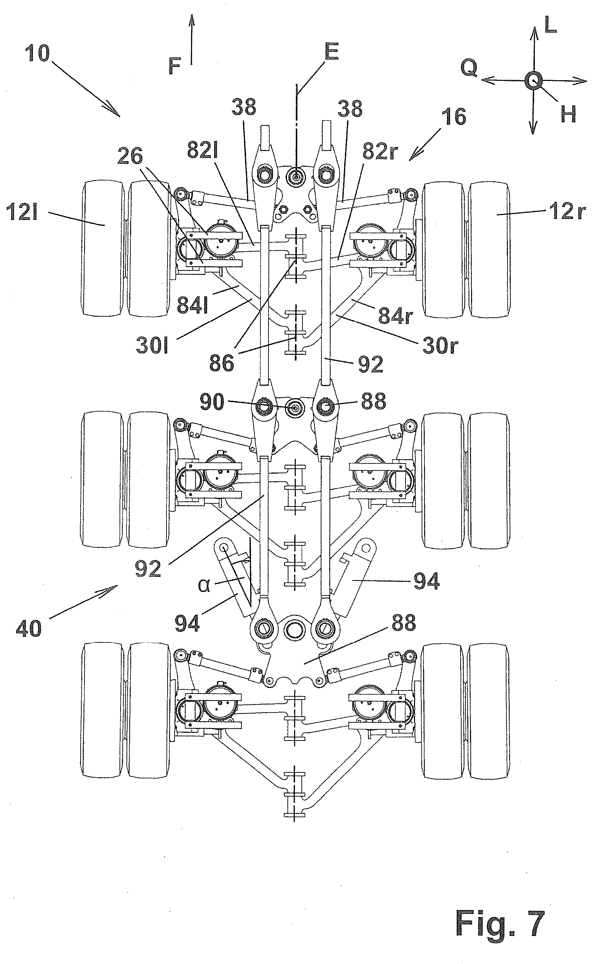

Figur 7 zeigt eine Draufsicht auf das Fahrwerk und die Lenkung des Schwerlastanhängers 10, in der zum einfacheren Verständnis der Zeichnung lediglich diejenigen Bauteile gezeigt sind, die zur Erläuterung der Ausbildung der Dreiecksquerlenker 30 und der Lenkeinrichtung 40 erforderlich sind.

Wie man in Figur 7 erkennt, sind die Dreiecksquerlenker 30l und 30r für die linken bzw. rechten Räder 12 nicht identisch ausgebildet, sondern derart, dass von den beiden Schenkeln 82l, 84l und 82r, 84r der Querlenker 30l, 30r das freie Ende jeweils eines dieser Schenkel, nämlich das freie Ende der Schenkel 82r bzw. 84l, zwischen die beiden Schenkel 82l, 84l bzw. 82r, 84r des jeweils anderen Dreiecksquerlenkers 30l bzw. 30r eingreift. In der Ausführungsform gemäß Figur 7 erstrecken sich die Querlenker 30l, 30r dabei in Querrichtung Q des Schwerlastanhängers 10 exakt bis zur Längsmittelebene E des Schwerlastanhängers 10. Dort sind die an den freien Enden der Schenkel 82l, 84l, 82r, 84r angeordneten Lagerbuchsen paarweise über einen gemeinsamen Lagerbolzen 86 (siehe auch Figur 2) an den Rahmenteilen 32 gelagert. Auf diese Weise können die Querlenker 30 länger ausgebildet werden, als dies beispielsweise aus der EP 1 985 474 A2 bekannt ist. Dies wirkt sich beim Ein- und Ausfedern der Räder 12 auf die Änderung sowohl der Spurweite als auch des Radsturzes vorteilhaft aus.

Für eine Abwandlung der ersten Ausführungsform ist in den Figuren 9 bis 11 dargestellt, dass die Querlenker 30' sogar noch länger ausgebildet werden können, wenn sie sich von dem ihnen zugeordneten Rad 12' ausgehend sogar über die Längsmittelebene des Schwerlastanhängers 10' hinaus erstrecken, und zwar vorzugsweise bis zum gegenüber liegenden Rand der Baggermulde 34', und erst dort über Lagerbolzen 86' an Rahmenteilen 32' des Rahmens 14' des Schwerlastanhängers 10' angelenkt werden. Durch diese Abwandlung kann die Änderung sowohl der Spurweite als auch des Radsturzes beim Ein- und Ausfedern der Räder 12' weiter reduziert werden.

Um trotz der großen Länge der Querlenker 30' in jedem Ein- und Ausfederungszustand der Räder 12' eine hohe Bodenfreiheit sicherstellen zu können, sind die Schenkel 82', 84' der Querlenker 30' gekrümmt ausgebildet, und zwar derart, dass die konkave Seite der Krümmung in Höhenrichtung H des Schwerlastanhängers 10' nach unten weist.

Wiederum mit Bezug auf Figur 7 soll nun noch die Lenkeinrichtung 40 des Schwerlastanhängers 10 erläutert werden:
Am Rahmen 14 des Schwerlastanhängers 10 sind Schwenkplatten 88 jeweils um eine in Höhenrichtung H verlaufende Schwenkachse 90 schwenkbar angebracht, die vorzugsweise auf der Längsmittelebene E des Schwerlastanhängers 10 angeordnet ist. Jede der Schwenkplatten 88 ist zwei in Querrichtung Q des Schwerlastanhängers 10 einander gegenüber liegenden Rädern 12 zugeordnet und mit deren Radaufhängungen 16 über die Lenkspurstangen 38 verbunden. Zudem sind einander in Längsrichtung L des Schwerlastanhängers 10 benachbarte Schwenkplatten 88 über zwei im Wesentlichen in Längsrichtung L verlaufende Verbindungsstangen 92 verbunden. Die beiden Verbindungsstangen 92 sind dabei links bzw. rechts der Längsmittelebene E in einem vorbestimmten Abstand von den Schwenkachsen 90 an den Schwenkplatten 88 angelenkt. An der in Figur 7 untersten Schwenkplatte 88 greifen zwei Lenkzylinder 94 an, um diese Schwenkplatte 88 im oder gegen den Uhrzeigersinn verschwenken zu können. Diese Schwenkbewegung wird über die Verbindungsstangen 92 auch auf die anderen Schwenkplatten 88 und von dort weiter über die Lenkspurstangen 38 auf die Räder 12 übertragen. Dabei kann durch geeignete Wahl der Anlenkstellen der Lenkspurstangen 38 an den Schwenkplatten 88 für jedes Räderpaar ein anderes Schwenkwinkel-zu-Lenkwinkel-Übersetzungsverhältnis gewählt werden.

Erfindungsgemäß verlaufen die Lenkzylinder nicht in Längsrichtung L des Schwerlastanhängers 10, sondern relativ zu dieser unter einem Winkel α.

Hierdurch kann ausreichend Bauraum für die Anbindung der freien Schenkel der Querlenker 30 am Rahmen 14 des Schwerlastanhängers 10 bereitgestellt werden.

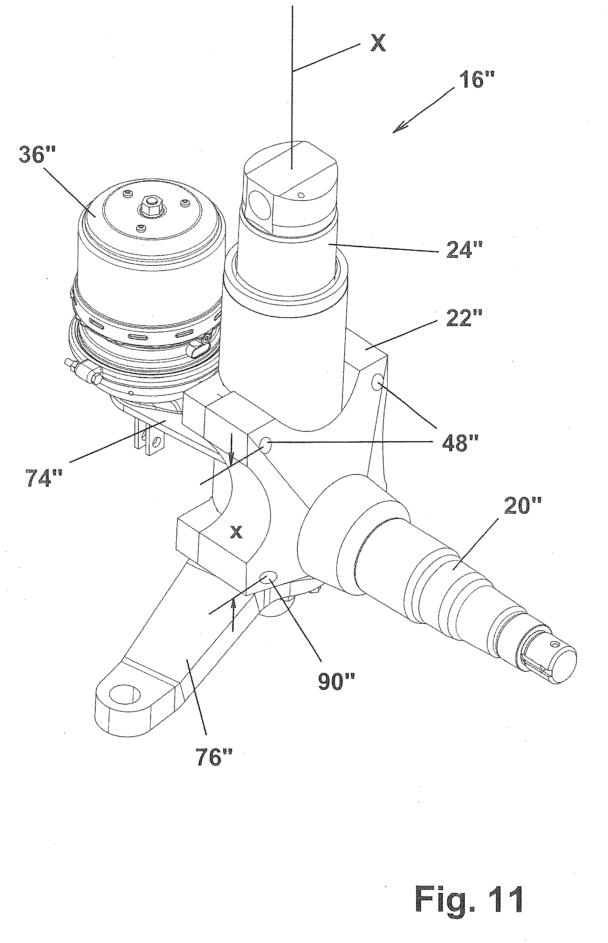

In den Figuren 11 bis 13 ist eine zweite Ausführungsform der vorliegenden Erfindung dargestellt. Die zweite Ausführungsform gemäß Figuren 11 bis 13 entspricht im Wesentlichen der ersten Ausführungsform gemäß Figuren 3 bis 6. Daher sind in den Figuren 11 bis 13 analoge Teile mit den gleichen Bezugszeichen versehen wie in den Figuren 3 bis 6, jedoch zusätzlich mit einem " " " versehen. Darüber hinaus wird die Ausführungsform der Figuren 11 bis 13 im Folgenden nur insoweit beschrieben werden, als sie sich von der Ausführungsform gemäß Figuren 3 bis 6 unterscheidet, auf deren Beschreibung hiermit ansonsten ausdrücklich verwiesen sei.

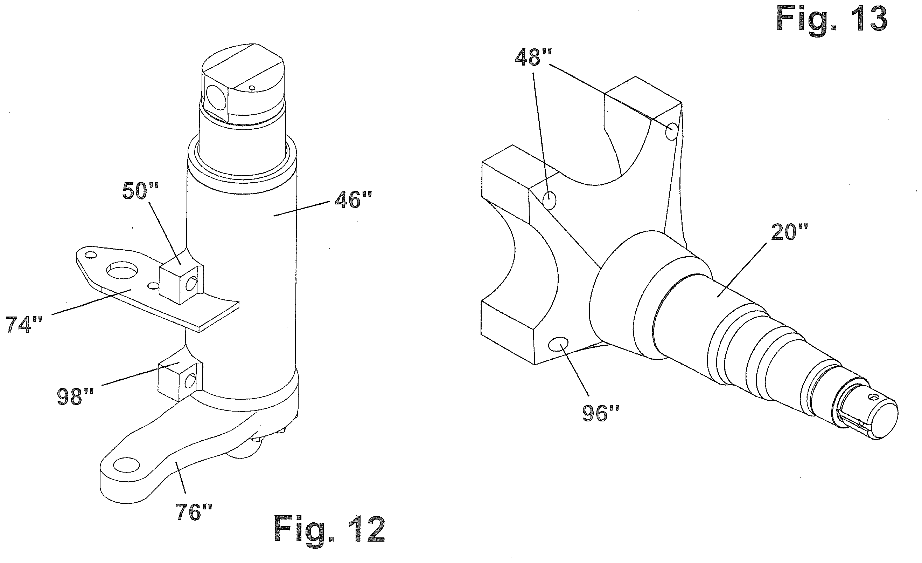

Figur 11 zeigt die Gesamtheit der Hauptkomponenten der erfindungsgemäßen Einzelradaufhängung 16" gemäß der zweiten Ausführungsform in einer Figur 3 entsprechenden perspektivischen Ansicht, während Figur 12 das Kolben-Zylinder-Aggregat 24" und Figur 13 den Achsstummel 20" einschließlich der Montagebaugruppe 22" ebenfalls in perspektivischer Ansicht zeigen.

Die Einzelradaufhängung 16" unterscheidet sich von der Einzelradaufhängung 16 zum einen durch das Fehlen der Stützplatte 42. Als Ersatz für die Stützplatte 42 umfasst die Montagebaugruppe 22" zwei Verbindungsstellen 96", die wie die Verbindungsstellen 48" vorzugsweise als Schraubverbindungsstellen ausgebildet sind, von den Verbindungsstellen 48" jedoch einen bezüglich der Zylinderachse X des Kolben-Zylinder-Aggregats 24" axialen Abstand x aufweisen. Entsprechend sind an dem Führungsrohr 46" des Kolben-Zylinder-Aggregats 24" nicht nur die den Verbindungsstellen 48" zugeordneten Verbindungsansätze 50" vorgesehen, sondern zusätzlich auch den Verbindungsstellen 96" zugeordnete Verbindungsansätze 98".

Zum anderen unterscheidet die Einzelradaufhängung 16" von der Einzelradaufhängung 16 dadurch, dass der Lenkhebel 76" nicht mit der Montagebaugruppe 22", sondern mit dem Führungsrohr 46" des Kolben-Zylinder-Aggregats 24" stoffschlüssig verbunden ist.

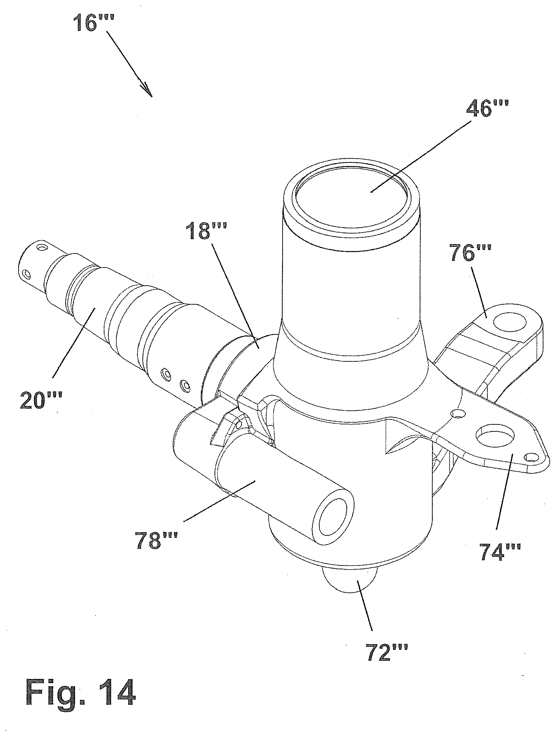

Figur 14 ist eine dritte Ausführungsform der vorliegenden Erfindung dargestellt, die im Wesentlichen der ersten Ausführungsform gemäß Figuren 3 bis 6 entspricht. Daher sind in Figur 14 analoge Teile mit den gleichen Bezugszeichen versehen wie in den Figuren 3 bis 6, jedoch zusätzlich mit einem "'''" versehen. Darüber hinaus wird die Ausführungsform der Figur 14 im Folgenden nur insoweit beschrieben werden, als sie sich von der Ausführungsform gemäß Figuren 3 bis 6 unterscheidet, auf deren Beschreibung hiermit ansonsten ausdrücklich verwiesen sei.

Die Einzelradaufhängung 16''' unterscheidet sich von der Einzelradaufhängung 16 dadurch, dass der Radträger 18''' und insbesondere dessen Achsstummel 20''' mit dem Führungsrohr 46''' des Kolben-Zylinder-Aggregats einstückig ausgebildet oder stoffschlüssig verbunden ist, beispielsweise durch Schweißen. Auch die an dieser Baueinheit angeordneten weiteren Teile, nämlich die Halterungsplatte 74''' für den Bremszylinder, der Lenkhebel 76''' und die Abstützeinrichtung 78''' für die Bremswelle, sind mit dieser vorzugsweise einstückig ausgebildet oder stoffschlüssig verbunden, beispielsweise durch Schweißen. Der Kugelbolzen 72''' zur Anlenkung des Querlenkers kann mit dieser Baueinheit beispielsweise durch Verschrauben verbunden sein.
Gegenstand 1: Schwerlastanhänger mit einer Mehrzahl von Rädern mit Einzelradaufhängung, dadurch gekennzeichnet, dass die Radaufhängung wenigstens eines der Räder, vorzugsweise aller Räder, mit Einzelradaufhängung eine MacPherson-Radaufhängung ist.
Gegenstand 2: Schwerlastanhänger nach Gegenstand 1, dadurch gekennzeichnet, dass der Zylinder des Kolben-Zylinder-Aggregats der MacPherson-Radaufhängung von einem, vorzugsweise zylindrischen, Führungsrohr umgeben ist.
Gegenstand 3: Schwerlastanhänger nach Gegenstand 2, dadurch gekennzeichnet, dass das eine Ende des Führungsrohrs mit dem freien Ende der Kolbenstange des Kolben-Zylinder-Aggregats axial fest verbunden ist.
Gegenstand 4: Schwerlastanhänger nach Gegenstand 2 oder 3, dadurch gekennzeichnet, dass an der Außenseite des Zylinders des Kolben-Zylinder-Aggregats, und zwar vorzugsweise jenem Ende, aus dem die Kolbenstange aus dem Zylinder austritt, benachbart, eine Gleitlageranordnung vorgesehen ist, welche mit der Innenseite des Führungsrohrs in Gleiteingriff steht oder/und dass an der Innenseite des Führungsrohrs, und zwar vorzugsweise dessen freiem Ende benachbart, eine Gleitlageranordnung vorgesehen ist, welche mit der Außenseite des Zylinders des Kolben-Zylinder-Aggregats in Gleiteingriff steht.
Gegenstand 5: Schwerlastanhänger nach einem der Gegenstände 1 bis 4, dadurch gekennzeichnet, dass das freie Ende des Zylinders des Kolben-Zylinder-Aggregats am Anhängerrahmen relativ zu diesem um die Achse des Zylinders unverdrehbar angelenkt ist, beispielsweise über einen Gelenkbolzen.
Gegenstand 6: Schwerlastanhänger nach einem der Gegenstände 1 bis 5, dadurch gekennzeichnet, dass das Führungsrohr des Kolben-Zylinder-Aggregats mit dem Radträger, vorzugsweise mit dem Achsstummel des Radträgers, einstückig ausgebildet oder stoffschlüssig verbunden ist.
Gegenstand 7: Schwerlastanhänger nach einem der Gegenstände 1 bis 5, dadurch gekennzeichnet, dass das Kolben-Zylinder-Aggregat, vorzugsweise das Führungsrohr des Kolben-Zylinder-Aggregats, Befestigungsstellen zur Befestigung an einer mit dem Radträger, vorzugsweise dem Achsstummel des Radträgers, verbundenen, vorzugsweise mit diesem einstückig ausgebildeten oder stoffschlüssig verbundenen, Montagebaugruppe aufweist.
Gegenstand 8: Schwerlastanhänger nach Gegenstand 7, dadurch gekennzeichnet, dass wenigstens eine Befestigungsstelle eine der Montagebaugruppe angehörende Stützplatte umfasst, auf der das Kolbenstangenende des Kolben-Zylinder-Aggregats im betriebsbereiten Zustand aufsteht.
Gegenstand 9: Schwerlastanhänger nach Gegenstand 8, dadurch gekennzeichnet, dass die Stützplatte zusammen mit einem ihr zugeordneten Rand eine Aufnahmetasche bildet, welche das Kolbenstangenende des Kolben-Zylinder-Aggregats im betriebsbereiten Zustand formschlüssig aufnimmt.
Gegenstand 10: Schwerlastanhänger nach Gegenstand 8 oder 9, dadurch gekennzeichnet, dass der Kugelkopf eines Kugelgelenks zur Anlenkung des Kolben-Zylinder-Aggregats an einem Querlenker der Radaufhängung an der Stützplatte angeordnet ist.
Gegenstand 11: Schwerlastanhänger nach einem der Gegenstände 8 bis 10, sofern diese mittelbar oder unmittelbar auf den Gegenstand 3 zurückbezogen sind, dadurch gekennzeichnet, dass die Stützplatte auch die Funktion einer Verbindungsplatte übernimmt, welche das freie Ende der Kolbenstange des Kolben-Zylinder-Aggregats axial fest mit dem Führungsrohr verbindet.
Gegenstand 12: Schwerlastanhänger nach einem der Gegenstände 8 bis 11, dadurch gekennzeichnet, dass in einem axialen Abstand zur Stützplatte wenigstens eine weitere Befestigungsstelle zur Befestigung des Kolben-Zylinder-Aggregats an der Montagebaugruppe vorgesehen ist.
Gegenstand 13: Schwerlastanhänger nach Gegenstand 7, dadurch gekennzeichnet, dass das Kolben-Zylinder-Aggregat mit der Montagebaugruppe über eine Mehrzahl von Schraubverbindungsstellen verbunden ist, von denen wenigstens zwei einen axialen Abstand voneinander aufweisen. Gegenstand 14: Schwerlastanhänger nach einem der Gegenstände 1 bis 13, dadurch gekennzeichnet, dass die Radaufhängung ferner einen Bremszylinder aufweist.
Gegenstand 15: Schwerlastanhänger nach Gegenstand 14, dadurch gekennzeichnet, dass der Bremszylinder der Radaufhängung dem Kolben-Zylinder-Aggregat benachbart, vorzugsweise an dieses unmittelbar angrenzend, angeordnet ist.
Gegenstand 16: Schwerlastanhänger nach Gegenstand 14 oder 15, dadurch gekennzeichnet, dass die Zylinderachsen des Bremszylinders und des Kolben-Zylinder-Aggregats zueinander im Wesentlichen parallel verlaufen.
Gegenstand 17: Schwerlastanhänger nach einem der Gegenstände 14 bis 16, dadurch gekennzeichnet, dass das freie Ende des Bremszylinders nach oben weist.
Gegenstand 18: Schwerlastanhänger nach einem der Gegenstände 14 bis 17, dadurch gekennzeichnet, dass die Achse des Bremszylinders relativ zur Radachse um eine vorbestimmte Distanz versetzt angeordnet ist, und zwar vorzugsweise in Fahrtrichtung des Schwerlastanhängers nach vorne versetzt.
Gegenstand 19: Schwerlastanhänger nach einem der Gegenstände 14 bis 18, dadurch gekennzeichnet, dass eine Abstützeinrichtung für eine den Bremszylinder mit der Bremseinrichtung des Radträgers verbindende Bremswelle vorgesehen ist, welche beispielsweise an der Montagebaugruppe oder/und dem Führungsrohr des Kolben-Zylinder-Aggregats angeordnet ist.
Gegenstand 20: Schwerlastanhänger nach einem der Gegenstände 14 bis 19, dadurch gekennzeichnet, dass eine Halterung für den Bremszylinder am Führungsrohr des Kolben-Zylinder-Aggregats oder/und an der Montagebaugruppe ausgebildet ist.
Gegenstand 21: Schwerlastanhänger nach einem der Gegenstände 1 bis 20, dadurch gekennzeichnet, dass ein Lenkhebel der Radaufhängung am Kolben-Zylinder-Aggregat, beispielsweise dessen Führungsrohr, oder/und an der Montagebaugruppe ausgebildet ist.
Gegenstand 22: Schwerlastanhänger nach einem der Gegenstände 1 bis 21, dadurch gekennzeichnet, dass das wenigstens eine Rad ein gelenktes Rad ist.
Gegenstand 23: Schwerlastanhänger nach Gegenstand 22, dadurch gekennzeichnet, dass in einer Projektion in Anhängerlängsrichtung betrachtet die Projektionsfläche des Bremszylinders die Projektionsflächen des Querlenkers und der Spurstange nicht überlappt.
Gegenstand 24: Schwerlastanhänger nach Gegenstand 22 oder 23, dadurch gekennzeichnet, dass in einer Vertikalprojektion betrachtet die Projektionsfläche der von der Kolbenstange des Bremszylinders und dem Bremsgestänge gebildeten Baugruppe in jeder Lenkstellung des Rads die Projektionsfläche der Spurstange nicht überlappt.
Gegenstand 25: Schwerlastanhänger nach einem der Gegenstände 1 bis 24, dadurch gekennzeichnet, dass das wenigstens eine Rad ein angetriebenes Rad ist.
Gegenstand 26: Schwerlastanhänger nach einem der Gegenstände 1 bis 25, dadurch gekennzeichnet, dass die Anlenkachse des Querlenkers der Radaufhängung am Anhängerrahmen unterhalb einer Baggermulde oder Zentralröhre des Anhängers angeordnet ist.
Gegenstand 27: Schwerlastanhänger nach dem Oberbegriff des Gegenstands 1, dem Kennzeichen des Gegenstands 26 und gewünschtenfalls dem Kennzeichen eines der Gegenstände 1 bis 25, dadurch gekennzeichnet, dass die Anlenkachse des Querlenker am Anhängerrahmen zumindest in der Längsmittelebene des Anhängers, vorzugsweise auf der dem zugeordneten Rad abgewandten Seite der Längsmittelebene angeordnet ist.
Gegenstand 28: Schwerlastanhänger nach Gegenstands 27, dadurch gekennzeichnet, dass bei Ausbildung der Querlenker zweier einander in Anhängerquerrichtung gegenüber liegender Räder als Dreiecksquerlenker die Anlenkachsen der freien Enden der Schenkel der Dreiecksquerlenker derart angeordnet sind, dass jeweils einer der Schenkel der beiden Dreiecksquerlenker mit seinem freien Ende zwischen die beiden Schenkel des jeweils anderen Dreiecksquerlenkers eingreift.
Gegenstand 29: Schwerlastanhänger nach Gegenstand 28, dadurch gekennzeichnet, dass die Anlenkachsen der beiden Dreiecksquerlenker alle in der Längsmittelebene des Anhängers angeordnet sind, wobei vorzugsweise jeweils zwei der Anlenkachsen zu einer gemeinsamen Anlenkachse zusammengefasst sind.
Gegenstand 30: Schwerlastanhänger nach Gegenstand 28, dadurch gekennzeichnet, dass die Anlenkachsen jedes der beiden Dreiecksquerlenker auf der vom zugehörigen Rad abgewandten Seite der Längsmittelebene des Anhängers angeordnet sind, vorzugsweise dem gegenüber liegenden Rand der Baggermulde oder Zentralröhre des Anhängers benachbart.
Gegenstand 31: Schwerlastanhänger nach Gegenstand 29 oder 30, dadurch gekennzeichnet, dass die Schenkel der Querlenker gekrümmt ausgebildet sind, wobei die konkave Seite der Krümmung im betriebsbereiten Zustand zur Fahrfläche hin weist.
Gegenstand 32: Schwerlastanhänger nach dem Oberbegriff des Gegenstands 1, dem Kennzeichen des Gegenstands 21 und gewünschtenfalls dem Kennzeichen eines der Gegenstände 1 bis 20 und 22 bis 31, dadurch gekennzeichnet, dass die Lenkzylinder der Lenkeinrichtung des Schwerlastanhängers mit der Anhängerlängsrichtung einen von Null verschiedenen Winkel einschließen, dessen Wert vorzugsweise zwischen etwa 10° und etwa 70° beträgt, noch bevorzugter zwischen etwa 35° und etwa 55°.

## Patentansprüche

1. Schwerlastanhänger (10) mit einer Mehrzahl von Rädern (12) mit Einzelradaufhängung (16),
**dadurch gekennzeichnet, dass** die Radaufhängung (16) wenigstens eines der Räder (12) mit Einzelradaufhängung, vorzugsweise aller Räder (12) mit Einzelradaufhängung, eine MacPherson-Radaufhängung mit einem Kolben-Zylinder-Aggregat (24) ist, dass die Radaufhängung (16) ferner einen Bremszylinder (36) aufweist, der dem Kolben-Zylinder-Aggregat (24) benachbart angeordnet ist und dessen freies Ende nach oben weist, und dass die Achse (Z) des Bremszylinders (36) relativ zur Radachse (Y) um eine vorbestimmte Distanz (d) versetzt angeordnet ist.

2. Schwerlastanhänger nach Anspruch 1,
**dadurch gekennzeichnet, dass** die Achse (Z) des Bremszylinders (36) relativ zur Radachse (Y) in Fahrtrichtung (F) des Schwerlastanhängers (10) nach vorne versetzt angeordnet ist.

3. Schwerlastanhänger nach Anspruch 1 oder 2,
**dadurch gekennzeichnet, dass** der Bremszylinder (36) dem Kolben-Zylinder-Aggregat (24) unmittelbar angrenzend angeordnet ist.

4. Schwerlastanhänger nach einem der Ansprüche 1 bis 3,
**dadurch gekennzeichnet, dass** das freie Ende des Zylinders (52) des Kolben-Zylinder-Aggregats (24) am Anhängerrahmen (14) relativ zu diesem um die Achse (X) des Zylinders (52) unverdrehbar angelenkt ist, beispielsweise über einen Gelenkbolzen (68).

5. Schwerlastanhänger nach einem der Ansprüche 1 bis 4,
**dadurch gekennzeichnet, dass** das dem freien Ende des Zylinders (52) gegenüber liegende Ende des Kolben-Zylinder-Aggregats (24) über einen Querlenker (30) am Anhängerrahmen (14) angelenkt ist, wobei das Kolben-Zylinder-Aggregat (24) mit dem Querlenker (30) vorzugsweise über ein Kugelgelenk (72) verbunden ist.

6. Schwerlastanhänger nach einem der Ansprüche 1 bis 5,
**dadurch gekennzeichnet, dass** das Kolben-Zylinder-Aggregat (24), vorzugsweise das Führungsrohr (46) des Kolben-Zylinder-Aggregats (24), Befestigungsstellen (42, 48; 96", 48") zur Befestigung an einer mit dem Radträger (18), vorzugsweise dem Achsstummel (20) des Radträgers (18), verbundenen, vorzugsweise mit diesem einstückig ausgebildeten oder stoffschlüssig verbundenen, Montagebaugruppe (22) aufweist.

7. Schwerlastanhänger nach Anspruch 6,
**dadurch gekennzeichnet, dass** wenigstens eine Befestigungsstelle eine der Montagebaugruppe (22) angehörende Stützplatte (42) umfasst, auf der das Kolbenstangenende des Kolben-Zylinder-Aggregats (24) im betriebsbereiten Zustand aufsteht.

8. Schwerlastanhänger nach Anspruch 7,
**dadurch gekennzeichnet, dass** die Stützplatte (42) zusammen mit einem ihr zugeordneten Rand (44) eine Aufnahmetasche bildet, welche das Kolbenstangenende des Kolben-Zylinder-Aggregats (24) im betriebsbereiten Zustand formschlüssig aufnimmt.

9. Schwerlastanhänger nach Anspruch 7 oder 8,
**dadurch gekennzeichnet, dass** der Kugelkopf (72) eines Kugelgelenks zur Anlenkung des Kolben-Zylinder-Aggregats (24) an einem Querlenker (30) der Radaufhängung (16) an der Stützplatte (42) angeordnet ist.

10. Schwerlastanhänger nach einem der Ansprüche 7 bis 9,
**dadurch gekennzeichnet, dass** in einem axialen Abstand (x) zur Stützplatte (42) wenigstens eine weitere Befestigungsstelle (48) zur Befestigung des Kolben-Zylinder-Aggregats (24) an der Montagebaugruppe (22) vorgesehen ist.

11. Schwerlastanhänger nach einem der Ansprüche 6 bis 10,
**dadurch gekennzeichnet, dass** eine Halterung (74) für den Bremszylinder (36) an einem Führungsrohr (46) des Kolben-Zylinder-Aggregats (24) oder/und an der Montagebaugruppe (22) ausgebildet ist.

12. Schwerlastanhänger nach einem der Ansprüche 6 bis 11,
**dadurch gekennzeichnet, dass** das wenigstens eine Rad (12) ein gelenktes Rad ist, wobei ein Lenkhebel (76) der Radaufhängung (16) am Kolben-Zylinder-Aggregat (24), beispielsweise dessen Führungsrohr (46), oder/und an der Montagebaugruppe (22) ausgebildet ist.

13. Schwerlastanhänger nach Anspruch 12,
**dadurch gekennzeichnet, dass** in einer Projektion in Anhängerlängsrichtung (L) betrachtet die Projektionsfläche des Bremszylinders (36) die Projektionsflächen des Querlenkers (30) und der Spurstange (38) nicht überlappt.

14. Schwerlastanhänger nach einem der Ansprüche 1 bis 13,
**dadurch gekennzeichnet, dass** die Anlenkachse des Querlenkers (30) der Radaufhängung (16) am Anhängerrahmen (14) unterhalb einer Baggermulde (34) oder Zentralröhre des Anhängers (10) angeordnet ist,
wobei die Anlenkachse des Querlenkers (30) am Anhängerrahmen (14) auf der dem zugeordneten Rad (12) abgewandten Seite der Längsmittelebene (E) des Anhängers (10) angeordnet ist,
wobei bei Ausbildung der Querlenker (30l, 30r) zweier einander in Anhängerquerrichtung (Q) gegenüber liegender Räder (12l, 12r) als Dreiecksquerlenker die Anlenkachsen der freien Enden der Schenkel (82l, 84l, 82l, 84r) der Dreiecksquerlenker (30l, 30r) derart angeordnet sind, dass jeweils einer der Schenkel (84l, 82r) der beiden Dreiecksquerlenker (30l, 30r) mit seinem freien Ende zwischen die beiden Schenkel (82l, 84r, 82l, 84l) des jeweils anderen Dreiecksquerlenkers (30r, 30l) eingreift,
wobei die Anlenkachsen (86') jedes der beiden Dreiecksquerlenker (30') auf der vom zugehörigen Rad (12') abgewandten Seite der Längsmittelebene (E) des Anhängers (10') angeordnet sind, vorzugsweise dem gegenüber liegenden Rand der Baggermulde (34') oder Zentralröhre des Anhängers (10) benachbart, und
wobei die Schenkel (82', 84') der Querlenker (30') gekrümmt ausgebildet sind, wobei die konkave Seite der Krümmung im betriebsbereiten Zustand zur Fahrfläche hin weist.

## Claims

1. Heavy-duty trailer (10) comprising a plurality of wheels (12) having independent wheel suspension (16),
**characterised in that** the wheel suspension (16) of at least one of the wheels (12) having independent wheel suspension, preferably of all of the wheels (12) having independent wheel suspension, is MacPherson wheel suspension comprising a piston-cylinder unit (24), **in that** the wheel suspension (16) further has a brake cylinder (36) which is arranged so as to be adjacent to the piston-cylinder unit (24) and the free end of which points upwards, and **in that** the axis (Z) of the brake cylinder (36) is arranged so as to be offset by a predetermined distance (d) relative to the wheel axis (Y).

2. Heavy-duty trailer according to claim 1,
**characterised in that** the axis (Z) of the brake cylinder (36) is arranged so as to be offset to the front in the driving direction (F) of the heavy-duty trailer (10) relative to the wheel axis (Y).

3. Heavy-duty trailer according to either claim 1 or claim 2,
**characterised in that** the brake cylinder (36) is arranged so as to be directly adjacent to the piston-cylinder unit (24).

4. Heavy-duty trailer according to any of claims 1 to 3,
**characterised in that** the free end of the cylinder (52) of the piston-cylinder unit (24) is hinged, for example by means of a hinge bolt (68), to the trailer frame (14) such that it cannot rotate relative to said frame about the axis (X) of the cylinder (52).

5. Heavy-duty trailer according to any of claims 1 to 4,
**characterised in that** the end of the piston-cylinder unit (24) opposite the free end of the cylinder (52) is hinged to the trailer frame (14) by means of a transverse arm (30), the piston-cylinder unit (24) being connected to the transverse arm (30) preferably by means of a ball joint (72).

6. Heavy-duty trailer according to any of claims 1 to 5,
**characterised in that** the piston-cylinder unit (24), preferably the guide tube (46) of the piston-cylinder unit (24), has fastening points (42, 48; 96", 48") for fastening to a mounting assembly (22) that is connected to the wheel carrier (18), preferably to the axle end (20) of the wheel carrier (18), is preferably integral therewith or is preferably integrally connected thereto.

7. Heavy-duty trailer according to claim 6,
**characterised in that** at least one fastening point comprises a support plate (42) which is part of the mounting assembly (22) and on which the piston rod end of the piston-cylinder unit (24) rests in the operational state.

8. Heavy-duty trailer according to claim 7,
**characterised in that** the support plate (42) forms, together with an edge (44) associated therewith, a receiving pocket which interlockingly receives the piston rod end of the piston-cylinder unit (24) in the operational state.

9. Heavy-duty trailer according to either claim 7 or claim 8,
**characterised in that** the ball head (72) of a ball joint for hinging the piston-cylinder unit (24) to a transverse arm (30) of the wheel suspension (16) is arranged on the support plate (42).

10. Heavy-duty trailer according to any of claims 7 to 9,
**characterised in that** at least one additional fastening point (48) for fastening the piston-cylinder unit (24) to the mounting assembly (22) is provided at an axial spacing (x) from the support plate (42).

11. Heavy-duty trailer according to any of claims 6 to 10,
**characterised in that** a support means (74) for the brake cylinder (36) is formed on a guide tube (46) of the piston-cylinder unit (24) and/or on the mounting assembly (22).

12. Heavy-duty trailer according to any of claims 6 to 11, **characterised in that** the at least one wheel (12) is a steered wheel, a steering lever (76) of the wheel suspension (16) being formed on the piston-cylinder unit (24), for example on the guide tube thereof (46), and/or on the mounting assembly (22).

13. Heavy-duty trailer according to claim 12,
**characterised in that**, in a projection viewed in the trailer longitudinal direction (L), the projection surface of the brake cylinder (36) does not overlap the projection surfaces of the transverse arm (30) and the tie rod (38).

14. Heavy-duty trailer according to any of claims 1 to 13,
**characterised in that** the pivot pin of the transverse arm (30) of the wheel suspension (16) is arranged on the trailer frame (14) below an excavator recess (34) or central tubes of the trailer (10),
the pivot pin of the transverse arm (30) being arranged on the trailer frame (14) on the side of the central longitudinal plane (E) of the trailer (10) remote from the associated wheel (12),
when the transverse arms (30l, 30r) of two wheels (121, 12r) that are opposite one another in the trailer transverse direction (Q) are designed as wishbones, the pivot pins of the free ends of the legs (82l, 84l, 82l, 84r) of the wishbones (30l, 30r) being arranged such that each of the legs (84l, 82r) of the two wishbones (30l, 30r) engages by means of the free end thereof between the two legs (82l, 84r, 82l, 84l) of the other wishbone (30r, 30l) in each case,
the pivot pins (86') of each of the two wishbones (30') being arranged on the side of the central longitudinal plane (E) of the trailer (10') remote from the associated wheel (12'), preferably so as to be adjacent to the opposite edge of the excavator recess (34') or central tubes of the trailer (10), and
the legs (82', 84') of the transverse arms (30') being curved, the concave side of the curve pointing towards the driving surface in the operational state.

## Revendications

1. Remorque pour poids lourd (10) avec une pluralité de roues (12) avec suspension indépendante (16),
**caractérisée en ce que** la suspension (16) d'au moins une des roues (12) avec suspension indépendante, de préférence de toutes les roues (12) avec suspension indépendante, est une suspension MacPherson avec un groupe piston-cylindre (24), que la suspension (16) présente en outre un cylindre de frein (36), qui est agencé de manière adjacente au groupe piston-cylindre (24) et dont l'extrémité libre est dirigée vers le haut, et que l'axe (Z) du cylindre de frein (36) est agencé de manière décalée d'une distance prédéterminée (d) par rapport à l'axe de roue (Y).

2. Remorque pour poids lourd selon la revendication 1,
**caractérisée en ce que** l'axe (Z) du cylindre de frein (36) est agencé de manière décalée vers l'avant par rapport à l'axe de roue (Y) dans le sens de circulation (F) de la remorque pour poids lourd (10).

3. Remorque pour poids lourd selon la revendication 1 ou 2,
**caractérisée en ce que** le cylindre de frein (36) est agencé de manière directement adjacente au groupe piston-cylindre (24).

4. Remorque pour poids lourd selon l'une quelconque des revendications 1 à 3, **caractérisée en ce que** l'extrémité libre du cylindre (52) du groupe piston-cylindre (24) est articulée sur le châssis de remorque (14) sans possibilité de rotation autour de l'axe (X) du cylindre (52) par rapport à celui-ci, par exemple par le biais d'un axe d'articulation (68).

5. Remorque pour poids lourd selon l'une quelconque des revendications 1 à 4, **caractérisée en ce que** l'extrémité du groupe piston-cylindre (24) située face à l'extrémité libre du cylindre (52) est articulée sur le châssis de remorque (14) par le biais d'un bras transversal (30), dans laquelle le groupe piston-cylindre (24) est relié au bras transversal (30) de préférence par le biais d'une articulation sphérique (72).

6. Remorque pour poids lourd selon l'une quelconque des revendications 1 à 5, **caractérisée en ce que** le groupe piston-cylindre (24), de préférence le tube de guidage (46) du groupe piston-cylindre (24), présente des points de fixation (42, 48 ; 96", 48") pour la fixation à un module de montage (22) relié au support de roue (18), de préférence à la fusée d'essieu (20) du support de roue (18), de préférence réalisé d'un seul tenant ou relié par liaison de matière avec celui-ci.

7. Remorque pour poids lourd selon la revendication 6,
**caractérisée en ce qu'**au moins un point de fixation comprend une plaque de support (42) appartenant au module de montage (22), sur laquelle se trouve l'extrémité de tige de piston du groupe piston-cylindre (24) à l'état prêt à fonctionner.

8. Remorque pour poids lourd selon la revendication 7,
**caractérisée en ce que** la plaque de support (42) forme, conjointement avec un bord (44) qui lui est associé, une poche de logement, laquelle reçoit l'extrémité de tige de piston du groupe piston-cylindre (24) par correspondance de forme à l'état prêt à fonctionner.

9. Remorque pour poids lourd selon la revendication 7 ou 8,
**caractérisée en ce que** la tête sphérique (72) d'une articulation sphérique est agencée pour l'articulation du groupe piston-cylindre (24) sur un bras transversal (30) de la suspension (16) au niveau de la plaque de support (42).

10. Remorque pour poids lourd selon l'une quelconque des revendications 7 à 9, **caractérisée en ce qu'**au moins un autre point de fixation (48) est prévu à une distance axiale (x) de la plaque de support (42) pour la fixation du groupe piston-cylindre (24) au niveau du module de montage (22).

11. Remorque pour poids lourd selon l'une quelconque des revendications 6 à 10, **caractérisée en ce qu'**un support (74) pour le cylindre de frein (36) est réalisé au niveau d'un tube de guidage (46) du groupe piston-cylindre (24) et/ou au niveau du module de montage (22).

12. Remorque pour poids lourd selon l'une quelconque des revendications 6 à 11, **caractérisée en ce que** l'au moins une roue (12) est une roue directrice, dans laquelle un levier de direction (76) de la suspension (16) est réalisé au niveau du groupe piston-cylindre (24), par exemple de son tube de guidage (46), et/ou au niveau du module de montage (22).

13. Remorque pour poids lourd selon la revendication 12,
**caractérisée en ce que** la surface de projection du cylindre de frein (36), dans une vue dans une projection dans la direction longitudinale de la remorque (L), ne recouvre pas les surfaces de projection du bras transversal (30) et de la barre d'accouplement (38).

14. Remorque pour poids lourd selon l'une quelconque des revendications 1 à 13, **caractérisée en ce que** l'axe d'articulation du bras transversal (30) de la suspension (16) au niveau du châssis de remorque (14) est agencé sous un creux destiné à loger un excavateur (34) ou des tubes centraux de la remorque (10),
dans laquelle l'axe d'articulation du bras transversal (30) au niveau du châssis de remorque (14) est agencé sur le côté du plan longitudinal médian (E) de la remorque (10) opposé à la roue (12) associée,
dans laquelle, lors de la réalisation des bras transversaux (30l, 30r) de deux roues (12l, 12r) se faisant face l'une l'autre dans la direction transversale de remorque (Q) en tant que bras transversaux triangulaires, les axes d'articulation des extrémités libres des branches (82l, 84l, 82l, 84r) des bras transversaux triangulaires (30l, 30r) sont agencés de sorte que respectivement une des branches (84l, 82r) des deux bras transversaux triangulaires (30l, 30r) vienne en prise avec son extrémité libre entre les deux branches (82l, 84r, 82l, 84l) de respectivement l'autre bras transversal triangulaire (30r, 30l),
dans laquelle les axes d'articulation (86') de chacun des deux bras transversaux triangulaires (30') sont agencés sur le côté du plan longitudinal médian (E) de la remorque (10') opposé à la roue associée (12'), de préférence de manière adjacente au bord opposé du creux d'excavateur (34') ou des tubes centraux de la remorque (10), et
dans laquelle les branches (82', 84') des bras transversaux (30') sont réalisées courbées, le côté concave de la courbure étant dirigé vers la surface de roulement à l'état prêt à fonctionner.
